# EUROPEAN PATENT APPLICATION

(11) **EP 2 306 663 A1**
(43) Date of publication of application: **06.04.2011**
(21) Application number: 09797379.6
(22) Date of filing: 03.06.2009
(51) Int. Cl.: H04B 10/18

(54) **METHOD, APPARATUS AND SYSTEM FOR REALIZING POLARIZATION MODE DISPERSION COMPENSATION**

(30) Priority: 14.07.2008 CN 200810130743
(71) Applicant: Huawei Technologies Co., Ltd., Longgang District, Shenzhen Guangdong 518129 (CN); Peking University, Beijing 100871 (CN)
(72) Inventor: LI, Juhao, Beijing 100871 (CN); ZHANG, Linhua, Beijing 100871 (CN); ZHANG, Dechao, Beijing 100871 (CN); ZHANG, Fan, Beijing 100871 (CN); CHEN, Zhangyuan, Beijing 100871 (CN); LI, Liangchuan, Guangdong 518129 (CN)
(74) Representative: Körber, Martin Hans
(86) International application number: PCT/CN2009/072106
(87) International publication number: WO 2010/006532

(57) **Abstract**

A method, device, system for realizing polarization mode dispersion (PMD) compensation are provided. The method for realizing PMD compensation includes: de-multiplexing a polarization-multiplexed optical signal, to obtain a first polarization light and a second polarization light; and joint-equalizing the first polarization light and the second polarization light, to obtain a first equalization signal and a second equalization signal. Since the polarization-multiplexed optical signal is de-multiplexed and then joint-equalized, not only the intra-channel symbol interference but also the inter-channel symbol interference during transmission of the polarization-multiplexed optical signal is eliminated, so as to realize the PMD compensation.

## Description

The application claims the benefit of priority to China Patent Application No. 200810130743.5, filed on July 14, 2008, and entitled "METHOD, DEVICE, AND SYSTEM FOR REALIZING POLARIZATION MODE DISPERSION COMPENSATION", which is incorporated herein by reference in its entirety.

### FIELD OF THE TECHNOLOGY

The present invention relates to the field of optical fiber communication technology, and more particularly to a method, device, and system for realizing polarization mode dispersion (PMD) compensation.

### BACKGROUND OF THE INVENTION

Optical fiber communication technology has become one of the main streams of modern communications and plays a decisive role in modern telecommunication networks. Polarization multiplexing technology is a technique attracting extensive attention in optical fiber communication technology, in which two beams of signal light of the same frequency orthogonal to each other (chx, chy) are individually modulated at a transmitting end, and then combined by a polarization beam combiner for transmission, so that the spectral efficiency is doubled. In a polarization-multiplexing optical fiber communication system of direct detection, a receiving end uses a set of dynamic polarization control (DPC) device to separate the two beams of individually modulated polarization signal light and send the light to two receivers for receiving data.

In the implementation of the present invention, the inventor found that: in a single mode optical fiber, a fundamental mode contains two polarization modes which are perpendicular to each other, and during transmission along the optical fiber, the optical fiber will inevitably be impacted by the external environment, such as variations or disturbances of temperature, pressure, and other factors, resulting in coupling of the two polarization modes. Moreover, the transmitting speeds of the two polarization modes are not the same, thus causing undetermined volume of optical pulse broadening, which is equivalent to that random dispersion is generated by the polarization mode, that is, polarization mode dispersion (PMD). PMD may cause intra-channel interference. While in an optical fiber communication system adopting polarization multiplexing, PMD not only causes intra-channel interference, but also introduces inter-channel interference as the influence of PMD on the spectral component of the signal light is different, the polarization angle will be different, and thus the orthogonal characteristics of the two polarization channels are changed. When the receiving end separates the two beams of individually modulated polarization signal light, merely the intra-channel interference can be eliminated, while the inter-channel interference cannot be eliminated.

### SUMMARY OF THE INVENTION

The present invention is directed to a method, device, and system for realizing PMD compensation, so as to eliminate inter-channel interference of a polarization-multiplexed optical signal after being de-multiplexed.

In an embodiment, the present invention provides a method for realizing PMD compensation, which includes the following steps.

A polarization-multiplexed optical signal is de-multiplexed, to obtain a first polarization light and a second polarization light.

The first polarization light and the second polarization light are joint-equalized, to obtain a first equalization signal and a second equalization signal respectively.

In an embodiment, the present invention provides a device for realizing PMD compensation, which includes a DPC unit and a joint-equalizing unit.

The DPC unit is configured to de-multiplex a polarization-multiplexed optical signal, to obtain a first polarization light and a second polarization light.

The joint-equalizing unit is configured to joint-equalize the first polarization light and the second polarization light obtained by the DPC unit, to obtain a first equalization signal and a second equalization signal respectively.

In an embodiment, the present invention provides a polarization-multiplexing optical fiber communication system, which includes a transmitting end and a receiving end connected by a transmission link.

The transmitting end is configured to transmit two beams of signal light of the same frequency orthogonal to each other after modulation and combination.

The receiving end is configured to de-multiplex a polarization-multiplexed optical signal from the transmitting end, to obtain a first polarization light and a second polarization light; and joint-equalize the first polarization light and the second polarization light, to obtain a first equalization signal and a second equalization signal respectively.

In the present invention, since the polarization-multiplexed optical signal is de-multiplexed and then oint-equalized, not only the intra-channel symbol interference but also the inter-channel symbol interference during transmission of the polarization-multiplexed optical signal is eliminated, so as to realize the PMD compensation.

### BRIEF DESCRIPTION OF THE DRAWINGS

FIG. 1 is a schematic flow chart of a method for realizing PMD compensation according to an embodiment of the present invention;
FIG. 2 is a schematic structural view of a device for realizing PMD compensation according to an embodiment of the present invention;
FIG. 3 is a schematic structural view of a polarization-multiplexing optical fiber communication system for realizing PMD compensation according to an embodiment of the present invention;
FIG. 4 is a schematic view of relations between differential group delay (DGD) and optical signal-to-noise ratio (OSNR); and
FIG. 5 is a schematic view of relations between a deviation angle of a de-multiplexing angle and an optimal de-multiplexing angle and OSNR.

### DETAILED DESCRIPTION OF THE EMBODIMENTS

Specific embodiments of the present invention are further described in detail below with reference to the accompanying drawings.

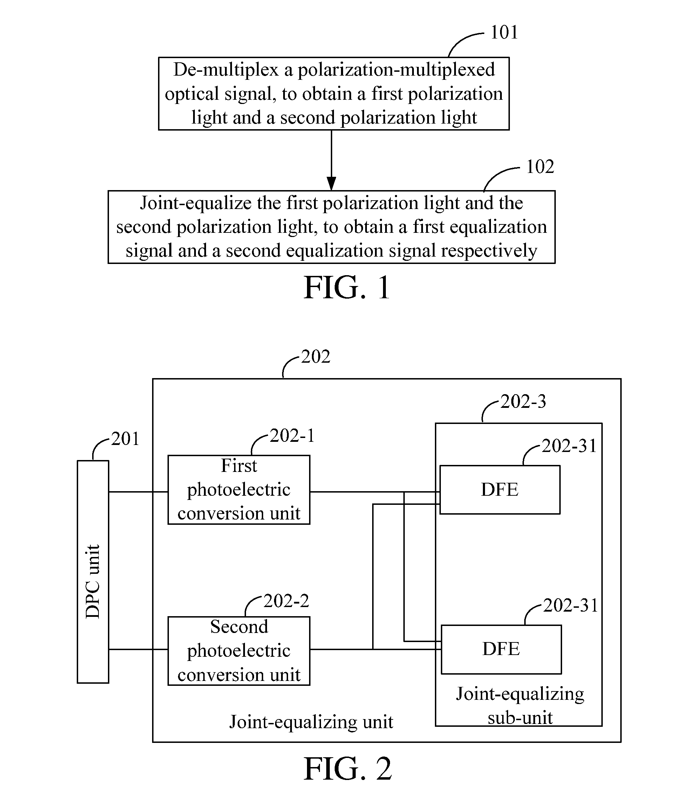

In an embodiment, the present invention provides a method for realizing PMD compensation. Referring to FIG. 1, the method includes the following steps.

In Step 101, a polarization-multiplexed optical signal is de-multiplexed, to obtain a first polarization light and a second polarization light.

Through de-multiplexing, the polarization-multiplexed optical signal is split in two orthogonal polarization directions, so as to output a first polarization light and a second polarization light respectively.

In Step 102, the first polarization light and the second polarization light are joint-equalized, to obtain a first equalization signal and a second equalization signal respectively.

When a signal is transmitted through an optical fiber channel, inter-symbol interference (ISI) occurs. If the signal is not processed, a high error rate will be caused. In order to solve the ISI problem, before deciding the received signal, the ISI in the signal is compensated. Such compensation scheme is referred to as equalization, and a device for realizing the compensation scheme is called an equalizer.

When multiple signals are provided in the transmission link, for example, in a wavelength-division-multiplexing (WDM) optical fiber communication system, besides ISI of the signals, influence may exist among the signals, and inter-symbol interference is caused. At this time, when the signal is joint-equalized, in addition to the ISI of the signal itself, the interference from other signals also needs to be compensated. Such equalization method is referred to as joint equalization, and an equalizer used in this method is called a joint-equalizer.

In this embodiment, the joint equalization is to compensate the ISI of the first polarization light and the interference of the second polarization light on the first polarization light, to obtain a first equalization signal; and to compensate the ISI of the second polarization light and the interference of the first polarization light on the second polarization light, to obtain a second equalization signal. Specifically, any one of the following modes can be adopted.

### I. Joint Viterbi Equalization

The first polarization light and the second polarization light are compiled into a set of symbol sequence.

In a polarization multiplexing system, two orthogonal polarization signals are transmitted at the same bit rate, and data recovery is performed by adopting the same clock, so that the bit sequence of the two orthogonal polarization signals is considered to be aligned in time, and the two orthogonal polarization signals may be compiled into a set of symbol sequence. In accordance with different Viterbi algorithms, the set of symbol sequence may be a set of symbol sequence in which each symbol has two bits or a set of symbol sequence in which each symbol has four bits. Different setting modes are merely corresponding to different complexity of the Viterbi algorithm, and have no influence on the joint equalization result.

Joint Viterbi equalization is performed on the symbol sequence obtained through compiling, to obtain a first equalization signal and a second equalization signal respectively.

### II. Joint Decision Feedback Equalization

According to a first tap coefficient and a second tap coefficient, joint decision feedback equalization is performed on the first polarization light and the second polarization light, to obtain a first equalization signal and a second equalization signal respectively. The first tap coefficient is a tap coefficient of the first polarization light, and the second tap coefficient is a tap coefficient of the second polarization light.

The first tap coefficient may be calculated according to a forward step and a backward step of a channel for transmitting the first polarization light. The second tap coefficient may be calculated according to a forward step and a backward step of a channel for transmitting the second polarization light.

### III. Joint Forward Feedback Equalization

According to a first tap coefficient and a second tap coefficient, joint forward feedback equalization is performed on the first polarization light and the second polarization light, to obtain a first equalization signal and a second equalization signal respectively. The first tap coefficient is a tap coefficient of the first polarization light, and the second tap coefficient is a tap coefficient of the second polarization light.

### IV. Combination of Viterbi Equalization and Decision Feedback Equalization

The first polarization light and the second polarization light are compiled into a set of symbol sequence.

Viterbi equalization is performed on the symbol sequence obtained through compiling according to the first polarization light, to obtain a first equalization signal.

Decision feedback equalization is performed on the second polarization light according to a first tap coefficient and a second tap coefficient, to obtain a second equalization signal. The first tap coefficient is a tap coefficient of the first polarization light, and the second tap coefficient is a tap coefficient of the second polarization light.

### V. Combination of Viterbi Equalization and Forward Feedback Equalization

The first polarization light and the second polarization light are compiled into a set of symbol sequence.

Viterbi equalization is performed on the symbol sequence obtained through compiling according to the first polarization light, to obtain a first equalization signal.

Forward feedback equalization is performed on the second polarization light according to a first tap coefficient and a second tap coefficient, to obtain a second equalization signal. The first tap coefficient is a tap coefficient of the first polarization light, and the second tap coefficient is a tap coefficient of the second polarization light.

Furthermore, joint equalization may be performed on an electric signal or an optical signal. Specifically, the joint equalization on an electric signal includes the following steps.

The first polarization light and the second polarization light are joint-equalized to obtain a first equalization signal and a second equalization signal respectively, which includes the following steps.

Photoelectric conversion is performed on the first polarization light, to obtain a first electric signal.

Photoelectric conversion is performed on the second polarization light, to obtain a second electric signal.

The first electric signal and the second electric signal are joint-equalized, to obtain a first equalization signal and a second equalization signal. That is to say, the first equalization signal and the second equalization signal are both electric signals.

A first equalization signal and a second equalization signal obtained through joint equalization performed on an optical signal are both optical signals, and the following steps may be performed.

Photoelectric conversion is performed on the first equalization signal.

Photoelectric conversion is performed on the second equalization signal.

According to this embodiment, since the polarization-multiplexed optical signal is de-multiplexed and then joint-equalized, not only the intra-channel symbol interference but also the inter-channel symbol interference during transmission of the polarization-multiplexed optical signal is eliminated, so as to realize the PMD compensation.

In an embodiment, the present invention provides a device for realizing PMD compensation. Referring to FIG. 2, the device includes a DPC unit 201 and a joint-equalizing unit 202.

The DPC unit 201 is configured to split a polarization-multiplexed optical signal in two orthogonal polarization directions, to obtain a first polarization light and a second polarization light.

The joint-equalizing unit 202 is configured to joint-equalize the first polarization light and the second polarization light obtained by the DPC unit, to obtain a first equalization signal and a second equalization signal.

The joint-equalizing unit may be a joint Viterbi equalizer, a joint decision feedback equalizer (DFE), or a joint forward feedback equalizer (FFE).

Alternatively, the joint-equalizing unit may include a Viterbi equalizer and a DFE or an FFE.

The Viterbi equalizer is configured to compile the first polarization light and the second polarization light obtained by the DPC unit into a set of symbol sequence; and perform Viterbi equalization on the symbol sequence obtained through compiling according to the first polarization light, to obtain a first equalization signal.

The DFE or the FFE is configured to perform decision feedback equalization or forward feedback equalization on the second polarization light obtained by the DPC unit according to a first tap coefficient and a second tap coefficient, to obtain a second equalization signal. The first tap coefficient is a tap coefficient of the first polarization light, and the second tap coefficient is a tap coefficient of the second polarization light.

Optionally, the joint-equalizing unit may be a joint Viterbi equalizer, a joint DFE, a joint FFE, a combination of a Viterbi equalizer and a DFE, or a combination of a Viterbi equalizer and an FFE, and so on.

Furthermore, joint equalization may be performed on an electric signal or an optical signal. Specifically, when the joint equalization is performed on an electric signal, the joint-equalizing unit may include a first photoelectric conversion unit 202-1, a second photoelectric conversion unit 202-2, and a joint-equalizing sub-unit 202-3.

The first photoelectric conversion unit 202-1 is configured to perform photoelectric conversion on the first polarization light obtained by the DPC unit, to obtain a first electric signal.

The second photoelectric conversion unit 202-2 is configured to perform photoelectric conversion on the second polarization light obtained by the DPC unit, to obtain a second electric signal.

The joint-equalizing sub-unit 202-3 is configured to joint-equalize the first electric signal obtained by the first photoelectric conversion unit and the second electric signal obtained by the second photoelectric conversion unit, to obtain a first equalization signal and a second equalization signal respectively.

Optionally, the joint-equalizing sub-unit may be a joint Viterbi equalizer, a joint DFE, a joint FFE, a combination of a Viterbi equalizer and a DFE, or a combination of a Viterbi equalizer and an FFE, and so on. FIG. 2 merely shows a solution that the joint-equalizing sub-unit is a combination of two joint DFEs 202-31.

Furthermore, after joint-equalizing the optical signal, the device further includes a third photoelectric conversion unit and a fourth photoelectric conversion unit.

The third photoelectric conversion unit is configured to perform photoelectric conversion on the first equalization signal obtained by the joint-equalizing unit.

The fourth photoelectric conversion unit is configured to perform photoelectric conversion on the second equalization signal obtained by the joint-equalizing unit.

FIG. 2 merely shows a solution that the joint equalization is performed on an electric signal.

According to this embodiment, after the polarization-multiplexed optical signal is de-multiplexed by the DPC unit, the de-multiplexed signal is joint-equalized by the joint-equalizing unit, and thus not only the intra-channel symbol interference but also the inter-channel symbol interference during transmission of the polarization-multiplexed optical signal is eliminated, so as to realize the PMD compensation.

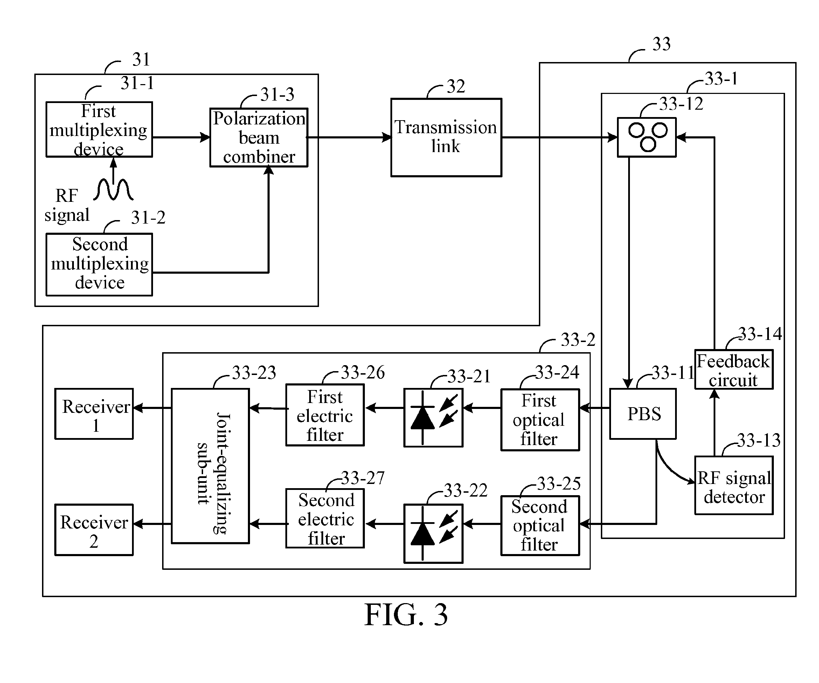

In an embodiment, the present invention provides a polarization-multiplexing optical fiber communication system for realizing PMD compensation. Referring to FIG. 3, at a transmitting end 31 of the system, two beams of signal light of the same frequency orthogonal to each other are modulated by a first multiplexing device 31-1 and a second multiplexing device 31-2 , and combined by a polarization beam combiner 31-3, and then transmitted by the transmitting end 31.

The signal transmitted by the polarization beam combiner 31-3 is sent to a receiving end 33 through a transmission link 32.

The receiving end 33 completes the signal de-multiplexing through a DPC unit 33-1, in which a polarization beam splitter (PBS) 33-11 in the DPC unit 33-1 splits a polarization-multiplexed optical signal in two orthogonal polarization directions, to obtain a first polarization light and a second polarization light.

Furthermore, the DPC unit 33-1 may further complete polarization tracking. Specifically, a polarization controller (APC) 33-12 in the DPC unit 33-1 adjusts a polarization angle of the polarization-multiplexed optical signal with respect to the PBS. A radio frequency (RF) signal detector 33-13 detects an RF signal power of a signal output by the PBS 33-11, and adjusts the APC 33-12 through a feedback circuit 33-14, in which an adjusting principle is to make the detected RF signal power to be the maximum (or the minimum).

The receiving end 33 joint-equalizes the first polarization light and the second polarization light obtained by the DPC unit through a joint-equalizing unit 33-2, to obtain a first equalization signal and a second equalization signal respectively.

Furthermore, joint equalization may be performed on an electric signal or an optical signal. Specifically, when the joint equalization is performed on an electric signal, the joint-equalizing unit 33-2 may include a first photoelectric conversion unit 33-21, a second photoelectric conversion unit 33-22, and a joint-equalizing sub-unit 33-23.

The first photoelectric conversion unit 33-21 is configured to perform photoelectric conversion on the first polarization light obtained by the DPC unit, to obtain a first electric signal.

The second photoelectric conversion unit 33-22 is configured to perform photoelectric conversion on the second polarization light obtained by the DPC unit, to obtain a second electric signal.

The joint-equalizing sub-unit 33-23 is configured to joint-equalize the first electric signal obtained by the first photoelectric conversion unit and the second electric signal obtained by the second photoelectric conversion unit, to obtain a first equalization signal and a second equalization signal respectively.

Furthermore, in order to eliminate the inner-optical signal interference, a first optical filter 33-24 may be coupled between the first photoelectric conversion unit and the PBS, to filter the first polarization light; and a second optical filter 33-25 may be coupled between the second photoelectric conversion unit and the PBS, to filter the second polarization light.

Furthermore, in order to eliminate the inner-electric signal interference, a first electric filter 33-26 is coupled between the first photoelectric conversion unit and the joint-equalizing sub-unit, to filter the first electric signal; and a second electric filter 33-27 is coupled between the second photoelectric conversion unit and the joint-equalizing sub-unit, to filter the second electric signal.

According to this embodiment, after the polarization-multiplexed optical signal is de-multiplexed by the DPC unit, the de-multiplexed signal is joint-equalized by the joint-equalizing unit, and thus not only the intra-channel symbol interference but also the inter-channel symbol interference during transmission of the polarization-multiplexed optical signal is eliminated, so as to realize the PMD compensation.

Furthermore, since PMD compensation is realized, the requirements on the polarization tracking speed of the polarization-multiplexing optical fiber communication system are decreased.

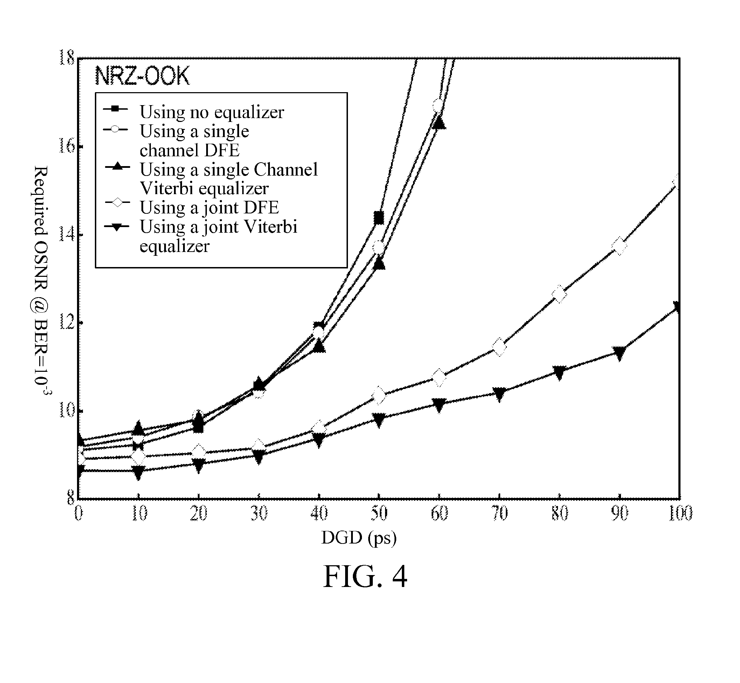

Referring to FIG. 4, in 10Gbit/s non-return to zero on-off keying (NRZ-OOK) signal polarization multiplexing system, as for relations between OSNR and DGD (in ps) required by reaching a bit error rate (BER) of 10⁻³, the lower the OSNR corresponding to the same DGD is, the better the PMD compensation effect will be. It can be seen from FIG. 4 that, as for common single channel compensation methods, no matter a single channel Viterbi equalizer or a single channel DFE is adopted, the PMD compensation effect is undesirable. By using a joint equalizer, desired equalization effect can be achieved. The joint Viterbi equalizer has the most preferred PMD compensation effect.

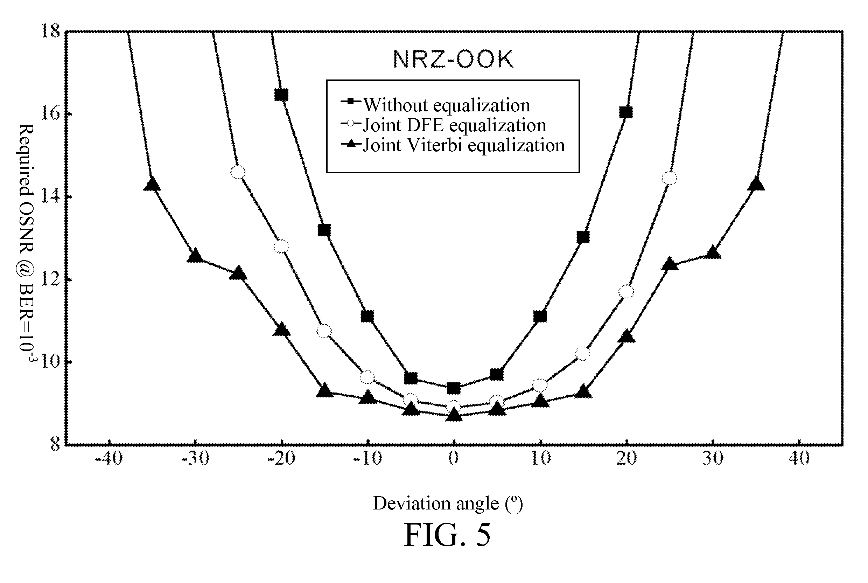

Furthermore, referring to FIG. 5, OSNR required for reaching a BER of 10⁻³ when the polarization tracking speed is lower than the variation speed of PMD and results in a deviation angle between the de-multiplexing angle and the optimal de-multiplexing angle is shown. It can be seen that, by using a joint equalizer, the tolerance of the deviation angle between the de-multiplexing angle and the optimal de-multiplexing angle is improved, so that the requirements on the polarization tracking speed of the polarization multiplexing system are decreased.

The word "receive" herein refers to obtaining information from other modules actively or receiving information sent by other modules.

It is understandable to those skilled in the art that the accompanying drawings are for illustrating the preferred embodiments only, and the modules or processes in the accompanying drawings are not mandatory.

In addition, the modules in the apparatus in the embodiments of the present invention may be distributed in the way described herein, or distributed in other ways, for example, in one or more other apparatuses. The modules in the foregoing embodiments may be combined into one, or split into several submodules.

The serial number of the embodiments given above is for clear description only, and does not represent the order of preference.

Through the descriptions of the preceding embodiments, those skilled in the art may understand that the present invention may be implemented by using hardware only or by using software and a necessary universal hardware platform. Based on such understandings, all or part of the technical solution under the present invention that makes contributions to the prior art may be essentially embodied in the form of a software product. The software product may be stored in a storage medium, which can be a magnetic disk, a Compact Disk Read-Only Memory (CD-ROM), a Read-Only Memory (ROM) or a Random Access Memory (RAM). The software product includes a number of instructions that enable a computer device (personal computer, server, or network device) to execute the methods provided in the embodiments of the present invention.

It should be noted that the above descriptions are merely preferred embodiments of the present invention, and person having ordinary skill in the art may make various improvements and refinements without departing from the spirit of the invention. All such modifications and refinements are intended to be covered by the present invention.

## Claims

1. A method for realizing polarization mode dispersion (PMD) compensation, comprising:
de-multiplexing a polarization-multiplexed optical signal, to obtain a first polarization light and a second polarization light; and
joint-equalizing the first polarization light and the second polarization light, to obtain a first equalization signal and a second equalization signal respectively.

2. The method according to claim 1, wherein the joint-equalizing the first polarization light and the second polarization light to obtain the first equalization signal and the second equalization signal respectively comprises:
compensating inter-symbol interference (ISI) of the first polarization light and interference of the second polarization light on the first polarization light, to obtain a first equalization signal; and
compensating ISI of the second polarization light and interference of the first polarization light on the second polarization light, to obtain a second equalization signal.

3. The method according to claim 1, wherein the joint-equalizing the first polarization light and the second polarization light to obtain the first equalization signal and the second equalization signal respectively comprises:
compiling the first polarization light and the second polarization light into a set of symbol sequence; and
performing joint Viterbi equalization on the symbol sequence obtained through compiling, to obtain a first equalization signal and a second equalization signal respectively.

4. The method according to claim 1, wherein the joint-equalizing the first polarization light and the second polarization light to obtain the first equalization signal and the second equalization signal respectively comprises:
according to a first tap coefficient and a second tap coefficient, performing joint decision feedback equalization on the first polarization light and the second polarization light, to obtain a first equalization signal and a second equalization signal respectively; or
according to a first tap coefficient and a second tap coefficient, performing joint forward feedback equalization on the first polarization light and the second polarization light, to obtain a first equalization signal and a second equalization signal respectively,
wherein the first tap coefficient is a tap coefficient of the first polarization light, and the second tap coefficient is a tap coefficient of the second polarization light.

5. The method according to claim 1, wherein the joint-equalizing the first polarization light and the second polarization light to obtain the first equalization signal and the second equalization signal respectively comprises:
compiling the first polarization light and the second polarization light into a set of symbol sequence;
performing Viterbi equalization on the symbol sequence obtained through compile according to the first polarization light, to obtain a first equalization signal; and
according to a first tap coefficient and a second tap coefficient, performing decision feedback equalization or forward feedback equalization on the second polarization light, to obtain a second equalization signal, wherein the first tap coefficient is a tap coefficient of the first polarization light, and the second tap coefficient is a tap coefficient of the second polarization light.

6. The method according to claim 1, wherein the joint-equalizing the first polarization light and the second polarization light to obtain the first equalization signal and the second equalization signal respectively comprises:
performing photoelectric conversion on the first polarization light, to obtain a first electric signal;
performing photoelectric conversion on the second polarization light, to obtain a second electric signal; and
joint-equalizing the first electric signal and the second electric signal, to obtain a first equalization signal and a second equalization signal respectively.

7. A device for realizing polarization mode dispersion (PMD) compensation, comprising:
a dynamic polarization control (DPC) unit, configured to de-multiplex a polarization-multiplexed optical signal, to obtain a first polarization light and a second polarization light; and
a joint-equalizing unit, configured to joint-equalize the first polarization light and the second polarization light obtained by the DPC unit, to obtain a first equalization signal and a second equalization signal respectively.

8. The device according to claim 7, wherein the joint-equalizing unit is a joint Viterbi equalizer, a joint decision feedback equalizer (DFE), or a joint forward feedback equalizer (FFE).

9. The device according to claim 7, wherein the joint-equalizing unit comprises:
a Viterbi equalizer, configured to compile the first polarization light and the second polarization light obtained by the DPC unit into a set of symbol sequence; and perform Viterbi equalization on the symbol sequence obtained through compiling according to the first polarization light, to obtain a first equalization signal; and
a DFE or an FFE, configured to perform decision feedback equalization or forward feedback equalization on the second polarization light obtained by the DPC unit according to a first tap coefficient and a second tap coefficient, to obtain a second equalization signal, wherein the first tap coefficient is a tap coefficient of the first polarization light, and the second tap coefficient is a tap coefficient of the second polarization light.

10. The device according to claim 7, wherein the joint-equalizing unit comprises:
a first photoelectric conversion unit, configured to perform photoelectric conversion on the first polarization light obtained by the DPC unit, to obtain a first electric signal;
a second photoelectric conversion unit, configured to perform photoelectric conversion on the second polarization light obtained by the DPC unit, to obtain a second electric signal; and
a joint-equalizing sub-unit, configured to joint-equalize the first electric signal obtained by the first photoelectric conversion unit and the second electric signal obtained by the second photoelectric conversion unit, to obtain a first equalization signal and a second equalization signal respectively.

11. The device according to claim 7, further comprising:
a third photoelectric conversion unit, configured to perform photoelectric conversion on the first equalization signal obtained by the joint-equalizing unit; and
a fourth photoelectric conversion unit, configured to perform photoelectric conversion on the second equalization signal obtained by the joint-equalizing unit.

12. A polarization-multiplexing optical fiber communication system, comprising a transmitting end and a receiving end, wherein
the transmitting end is configured to transmit two beams of signal light of the same frequency orthogonal to each other after modulation and combination; and
the receiving end is configured to de-multiplex a polarization-multiplexed optical signal from the transmitting end, to obtain a first polarization light and a second polarization light; and joint-equalize the first polarization light and the second polarization light, to obtain a first equalization signal and a second equalization signal respectively.

13. The system according to claim 12, wherein the transmitting end comprises:
a first multiplexing device and a second multiplexing device, configured to modulate the two beams of signal light of the same frequency orthogonal to each other respectively; and
a polarization beam combiner, configured to combine and transmit the optical signals modulated by the first multiplexing device and the second multiplexing device.

14. The system according to claim 12, wherein the receiving end comprises:
a dynamic polarization control (DPC) unit, configured to de-multiplex the polarization-multiplexed optical signal from the transmitting end, to obtain the first polarization light and the second polarization light; and
a joint-equalizing unit, configured to joint-equalize the first polarization light and the second polarization light obtained by the DPC unit, to obtain the first equalization signal and the second equalization signal respectively.

15. The system according to claim 14, wherein the DPC unit comprises:
a polarization beam splitter (PBS), configured to split the polarization-multiplexed optical signal in two orthogonal polarization directions, to obtain the first polarization light and the second polarization light;
a polarization controller (APC), configured to adjust a polarization angle of the polarization-multiplexed optical signal with respect to the PBS; and
a radio frequency (RF) signal detector, configured to detect an RF signal power of a signal output by the PBS, and adjust the APC through a feedback circuit, such that the detected RF signal power is the maximum or the minimum.

16. The system according to claim 14 or 15, wherein the joint-equalizing unit comprises:
a first photoelectric conversion unit, configured to perform photoelectric conversion on the first polarization light obtained by the DPC unit, to obtain a first electric signal;
a second photoelectric conversion unit, configured to perform photoelectric conversion on the second polarization light obtained by the DPC unit, to obtain a second electric signal; and
a joint-equalizing sub-unit, configured to joint-equalize the first electric signal obtained by the first photoelectric conversion unit and the second electric signal obtained by the second photoelectric conversion unit, to obtain the first equalization signal and the second equalization signal respectively.

17. The system according to claim 16, wherein the joint-equalizing unit further comprises:
a first optical filter, coupled between the first photoelectric conversion unit and the PBS, configured to filter the first polarization light; and
a second optical filter, coupled between the second photoelectric conversion unit and the PBS, configured to filter the second polarization light.

18. The system according to claim 16, wherein the joint-equalizing unit further comprises:
a first electric filter, coupled between the first photoelectric conversion unit and the joint-equalizing sub-unit, configured to filter the first electric signal; and
a second electric filter, coupled between the second photoelectric conversion unit and the joint-equalizing sub-unit, configured to filter the second electric signal.
